# EUROPÄISCHE PATENTSCHRIFT

(11) **EP 0 686 589 B1**
(45) Veröffentlichungstag und Bekanntmachung des Hinweises auf die Patenterteilung: **30.07.1997**
(21) Anmeldenummer: 95107937.5
(22) Anmeldetag: 24.05.1995
(51) Int. Cl.: B65G 69/28

(54) **Überladebrücke für Rampen**
Loading bridge for ramps
Pont de transbordement pour rampes

(30) Priorität: 07.06.1994 DE 4419876
(43) Veröffentlichungstag der Anmeldung: 13.12.1995
(73) Patentinhaber: Alten, Kurt, D-30974 Wennigsen (DE)
(72) Erfinder: Alten, Kurt, D-30974 Wennigsen (DE)
(74) Vertreter: Depmeyer, Lothar

(56) Entgegenhaltungen:
- DE-A- 3 507 215

## Beschreibung

Die Erfindung betrifft eine Überladebrücke für Rampen mit einer rampenseitig um eine waagerechte Achse verschwenkbaren, an ihrem vorderen Ende mit einer ein- und ausfahrbaren Verlängerung versehenen Brückenplatte, die durch zwei am Brückenrand befindliche, hydraulisch betriebene Hubzylinder nach oben schwenkbar ist, die die Brückenplatte unterfangen und am unteren Ende an der Rampe gelagert sind, wobei die Hubzylinder an ihren Enden mit einem ringförmigen Endstück ein sich quer zur Brücke erstreckendes, stangenförmiges, vorzugsweise rohrartiges Widerlager mit geringem Spiel umschliessen.

Bei den bekannten Überladebrücken dieser Art (DE-C-3507215) sind die Enden der als Rohre ausgeführten Widerlager fest in ringförmigen Halterungen angeordnet, die seitlich in einer Rampenausnehmung bzw. innen an die Brückenplatte seitlich abschliessenden Seitenblechen befestigt sind. Die Enden der Hubzylinder sind als Schellen ausgeführt, um so eine lösbare Befestigung der Zylinderenden an den Widerlagern herbeiführen zu können.
Eine solche Lagerung der Hubzylinderenden ist für Überladebrücken bestimmt, die zum Zwecke der Montage zusammen mit einem Untergestell in eine Brückenausnehmung abgesenkt werden, das die Halterungen für das untere Widerlager der Hubzylinder aufweist.

Diese Ausbildung der Überladebrücke ist für solche Konstruktionen umständlich, bei denen die Brückenplatte erst dann montiert wird, wenn sich das Untergestell mit der Halterung für das Widerlager bereits in der Rampenausnehmung befindet, um z.B. vorab eine Verankerung des Untergestells an der Rampe vorzunehmen.

Der Erfindung liegt die Ausgabe zugrunde, die eingangs erwähnten Überladebrücken so zu verbessern, dass das Untergestell und die Brückenplatte unabhängig voneinander montiert werden und die dann erforderliche Verbindung zwischen Beückenplatte und Untergestell schnell und einfach durchführen zu können.

Zur Lösung dieser Aufgabe sind erfindungsgemäss die Enden der stangenförmigen Widerlager in zu den Hubzylindern offenen, schalenförmigen Halterungen lösbar befestigt angeordnet.

Bei derartigen Überladebrücken kann die Montage der Hubzylinder als Verbindung zwischen der Brückenplatte und dem schon an der Rampe befestigten Untergestell sehr einfach durchgeführt werden. Die ringförmigen Endstücke der Hubzylinder werden zunächst auf die vorzugsweise als Rohre ausgeführten Widerlager aufgeschoben; alsdann werden die Enden der Widerlager in die schalenförmigen Halterungen eingelegt, worauf eine Fixierung der Enden der Widerlager an den schalenförmigen Halterungen vorzugsweise durch eine das Widerlager und die Halterung durchsetzende Schraube vollzogen wird.
Zweckmässigerweise werden die Widerlager bzw. die sie bildenden Rohre mit einem Vorsprung versehen z.B. unter Verwendung einer weiteren, das Widerlager durchsetzenden Schraube, um so Versetzungen der Hubzylinder auf den Widerlagern zur Brückenmitte hin auszuschliessen.

Ein Ausführungsbeispiel der Erfindung ist in der Zeichnung dargestellt. Es zeigen :
- Fig. 1: einen senkrechten Längsschnitt durch eine schematisch wiedergegebene Überladebrücke für Rampen in der Ruhestellung der Brückenplatte, jedoch mit ausgefahrener Verlängerung,
- Fig. 2: einen Ausschnitt aus Fig. 1 in vergrösserter Darstellung und
- Fig. 3: einen Teilquerschnitt durch die Brücke gemäss Fig. 1, und zwar einen Schnitt durch einen Randbereich.

Die Brückenplatte 1 mit einer ein- und ausfahrbaren Verlängerung 2 am freien Ende ist an ihrem rampenseitigen Ende um eine waagerechte Achse 3 an der Rampe 4 gelagert.
Beim Überladebetrieb stützt sich die Brückenplatte 1 über die Verlängerung 2 auf der zu be- bzw. entladenden Plattform eines Fahrzeuges ab. Die Überladebrücke befindet sich in einer Ausnehmung 5 der Rampe 4 und schliesst oben mit der Rampenoberfläche ab, um einen Rampenbetrieb bei einer in der Ruhestellung befindlichen Überladebrücke zu ermöglichen.

Aus Sicherheitsgründen ist die Brückenplatte 1 zu beiden Seiten mit senkrechten Seitenblechen 6 versehen; zwischen ihnen befinden sich versteifende Unterzüge 7, die längs zur Brücke verlaufen. Längsträger 8 unterfangen die Verlängerung 2 bzw. zu beiden Seiten der Brückenplatte 1 angeordnete Einstosszungen 9.

Das Untergestell der Überladebrücke bzw. der nicht verschwenkbare Teil dieser Brücke besteht im wesentlichen aus einem die obere Kante 10 der Ausnehmung 5 bildenden gebogenen Blech 11 mit Verankerung 12 und senkrecht nach unten geführten Blechen 13. Das Blech 13 ist unten in der Ausnehmung 5 mit einer angeschweissten, schräg nach oben hin offenen Halterung 14 versehen, die um einige Zentimeter in die Ausnehmung 5 vorspringt. Diese Halterung 14 ist nach Art einer Schale bzw. nach Art einer Halbschale ausgeführt.

Eine solche Halterung - mit 15 bezeichnet, befindet sich auch innen an den Seitenblechen 6, jedoch bezüglich ihrer Öffnung in Bezug auf die Halterung 14 entgegengesetzt. Die Öffnungen der beiden an jeder Brückenseite befindlichen Halterungen 14, 15 sind also einander zugekehrt.

Die paarweise übereinander angeordneten Halterungen 14, 15 dienen als Auflage für die Enden von waagerechten, quer zur Brücke angeordneten Rohren 16, die sich somit über die Brückenbreite bzw. die Breite der Ausnehmung 5 erstrecken. Die Rohrenden werden durch Schraubbolzen 17 gehalten, die die Halterung 14, 15 und das Rohrende durchsetzen.

Die Endstücke der schräg anstehenden, hydraulisch wirkenden Hubzylinder 18, 19 sind hohlzylindrisch und umschliessen mit geringem Spiel die Rohrenden.

Diese Endstücke sind mit 2o bezeichnet. Die innen gelegenen Stirnflächen der Endstücke 20 liegen an Bolzen 21 an, die die Rohre 16 ebenfalls durchsetzen und die Aufgabe haben, ein Verkanten bzw. Verrutschen der Hubzylinder 18, 19 auszuschliessen.

Nachdem das Untergestell der Überladebrücke ( ohne den verschwenkbaren Teil der Überladebrücke ) in die Rampe 4 eingelassen und fest verankert ist, kann die Brückenplatte 1 zusammen mit dem oberen Rohr 16, dem unteren Rohr 16 und den beiden Hubzylindern 18, 19 abgesenkt werden. Durch Aufsetzen des unteren Rohres 16 auf die Halterung 14 kommt die Stellung gemäss Zeichnung zustande. Es müssen nur noch zu beiden Seiten der Brücke die Schraubbolzen 17 angezogen werden, um den Betriebszustand herzustellen.

Es sei erwähnt, dass die Befestigung der Enden der Hubzylinder 18, 19 bzw. der zugehörigen Enden der Rohre 16 auf ihren zugehörigen Halterungen 14, 15 vorzugsweise am oberen und unteren Ende der Hubzylinder 18, 19 im Sinne der Erfindung vollzogen werden soll. Jedoch ist es auch möglich, die vorerwähnte Befestigung auch lediglich oben bzw. unten vorzunehmen, wobei dann am entgegengesetzten Ende der Hubzylinder 18, 19 eine abweichende Befestigung vorzunehmen wäre.

Vorzugsweise werden auch die Halterungen 14, 15 so ausgebildet, dass sie die Rohre 16 praktisch über den halben Umfang hinweg umschliessen, weil so die grösste Sicherheit gegeben und immer noch gewährleistet ist, dass dann die Rohrenden in die durch die Halterung 14, 15 gegebene Vertiefung eingesetzt werden können.

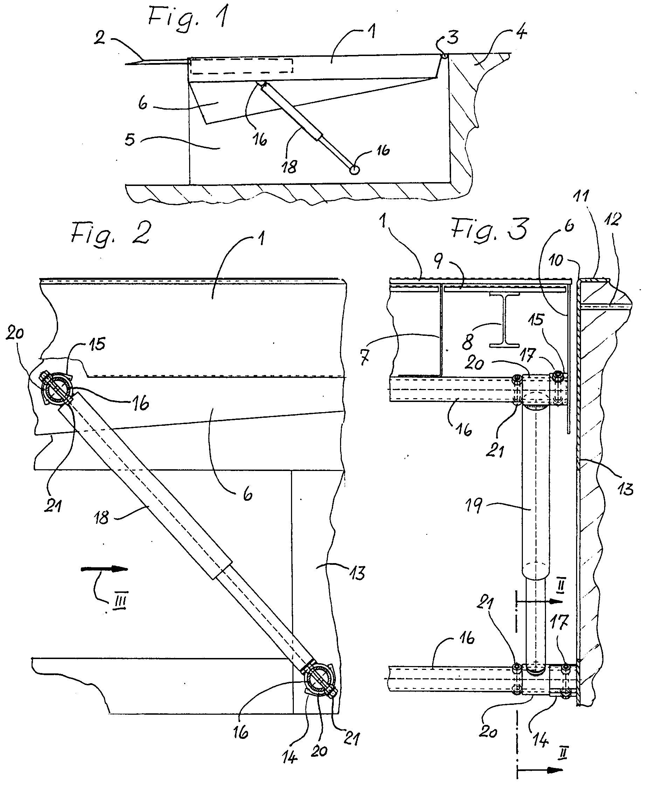

Es sei erwähnt, dass Fig. 3 ein Schnitt ist, der in Richtung des Pfeiles III von Fig. 2 zu sehen ist.
Ferner sei vermerkt, dass die Rohre 16 gemäss Fig. 2 entlang der Linie II - II von Fig. 3 geschnitten dargestellt sind.

## Patentansprüche

1. Überladebrücke für Rampen (4) mit einer rampenseitig um eine waagerechte Achse (3) verschwenkbaren, an ihrem vorderen Ende mit einer ein- und ausfahrbaren Verlängerung (2) versehenen Brückenplatte (1), die durch zwei am Brückenrand befindliche, hydraulisch betriebene Hubzylinder (18,19) nach oben schwenkbar ist, welche die Brückenplatte (1) unterfangen und am unteren Ende an der Rampe (4) abgestützt sind, wobei die Hubzylinder (18,19) an ihren Enden mit einem ringförmigen Endstück (20) ein sich quer zur Brücke erstreckendes, stangenförmiges, vorzugsweise rohrförmiges Widerlager (16) mit umschliessen, dadurch gekennzeichnet, dass die Enden der stangenförmigen Widerlager (16) in zu den Hubzylindern (18,19) hin offenen, schalenförmigen Halterungen (14,15) lösbar befestigt angeordnet sind.

2. Brücke nach Anspruch 1, dadurch gekennzeichnet, dass die Halterungen (14,15) die Widerlager (16) praktisch auf den halben Umfang umschliessen.

3. Brücke nach Anspruch 1, dadurch gekennzeichnet, dass die Widerlager (16) durch Schraubbolzen (17) gehalten sind, die die Widerlager und die Halterungen (14,15) durchsetzen.

4. Brücke nach Anspruch 1, dadurch gekennzeichnet, dass die die Widerlager (16) umschliessenden Endstücke (20) der Hubzylinder (18,19) an der den freien Enden der Widerlager abgekehrten Seite an einem Vorsprung (21) auf dem Widerlager anliegen.

5. Brücke nach Anspruch 4, dadurch gekennzeichnet, dass der Vorsprung von einem Bolzen (21) gebildet ist, der das Widerlager (16) durchsetzt.

6. Brücke nach Anspruch 1, dadurch gekennzeichnet, dass die die Widerlager (16) umschliessenden Endstücke (2o) der Hubzylinder (18,19) Hohlzylinder sind.

7. Brücke nach Anspruch 1, dadurch gekennzeichnet, dass die Öffnungen der Halterungen (14,15) eines Hubzylinders (18,19) einander zugekehrt sind.

## Claims

1. Transfer bridge for platforms (4), having a bridge plate (1) which is pivotable at its platform end about a horizontal axis (3), said bridge plate being provided at its front end with a retractable and extendable extension member (2) and being upwardly pivotable by means of two hydraulically operated lifting cylinders (18,19), which are situated on the edge of the bridge, engage beneath the bridge plate (1) and are supported at the lower end on the platform (4), the lifting cylinders (18,19) jointly surrounding at their ends, by means of an annular end-piece (20), a rod-shaped, preferably tubular, support (16), which extends transversely relative to the bridge, characterised in that the ends of the rod-shaped supports (16) are disposed so as to be detachably mounted in dish-shaped holders (14,15), which are open towards the lifting cylinders (18,19).

2. Bridge according to claim 1, characterised in that the holders (14,15) surround the supports (16) substantially over half the circumference.

3. Bridge according to claim 1, characterised in that the supports (16) are retained by screw bolts (17), which extend through the supports and the holders (14,15).

4. Bridge according to claim 1, characterised in that the end-pieces (20) of the lifting cylinders (18,19) surround the supports (16) and abut against a projection member (21) on the support on the side remote from the free ends of the supports.

5. Bridge according to claim 4, characterised in that the projection member is formed by a pin (21), which extends through the support (16).

6. Bridge according to claim 1, characterised in that the end-pieces (20) of the lifting cylinders (18,19) surround the supports (16) and are hollow cylinders.

7. Bridge according to claim 1, characterised in that the apertures in the holders (14,15) of a lifting cylinder (18,19) face one another.

## Revendications

1. Niveleur de quai (4) comportant un tablier (1) qui, du côté du quai, est monté basculant par rapport à un axe (3) horizontal, qui est muni à son extrémité avant d'un prolongement (2) pouvant être rentré et sorti et qui peut basculer vers le haut par deux vérins (18, 19) de levage à actionnement hydraulique, qui se trouvent au bord du niveleur, qui soutiennent le tablier (1) et qui sont montés à l'extrémité inférieure du quai (4), les vérins (18, 19) de levage comportant à leurs extrémités une pièce (20) d'extrémité annulaire qui entoure avec un petit peu de jeu une butée (16) en forme de barre, de préférence tubulaire, s'étendant transversalement au niveleur, caractérisé en ce que les extrémités des butées (16) en forme de barre sont montées en étant fixées de manière amovible dans des pièces de fixation (14, 15) en forme de coquille, qui sont ouvertes en direction des vérins (18, 19) de levage.

2. Niveleur suivant la revendication 1, caractérisé en ce que les pièces de fixation (14, 15) entourent les butées (16) pratiquement sur la moitié du pourtour.

3. Niveleur suivant la revendication 1, caractérisé en ce que les butées (16) sont maintenues par des boulons (17), qui traversent les butées et les pièces de fixation (14, 15).

4. Niveleur suivant la revendication 1, caractérisé en ce que les pièces (20) d'extrémité des vérins (18, 19) de levage entourant les butées s'appliquent, du côté tourné vers les extrémités libres des butées, à une pièce en saillie (21) sur la butée.

5. Niveleur suivant la revendication 4, caractérisé en ce que la pièce en saillie est formée par un boulon (21) qui traverse la butée (16).

6. Niveleur suivant la revendication 1, caractérisé en ce que les pièces (20) d'extrémité des vérins (18, 19) de levage entourant les butées sont des cylindres creux.

7. Niveleur suivant la revendication 1, caractérisé en ce que les ouvertures des pièces de fixation (14, 15) d'un vérin (18, 19) de levage sont tournées l'une vers l'autre.
